# EUROPÄISCHE PATENTSCHRIFT

(11) **EP 3 700 036 B1**
(45) Veröffentlichungstag und Bekanntmachung des Hinweises auf die Patenterteilung: **17.05.2023**
(21) Anmeldenummer: 20157311.0
(22) Anmeldetag: 14.02.2020
(51) Int. Cl.: H02G 15/34

(54) **ÜBERGANGSSTÜCK, DAS EINEN NORMALSTROMLEITER MIT EINEM SUPRALEITER ELEKTRISCH LEITEND VERBINDET**
TRANSITION PIECE ELECTRICALLY AND CONDUCTIVELY CONNECTING A NORMAL CURRENT CONDUCTOR TO A SUPERCONDUCTOR
ÉLÉMENT DE TRANSITION RACCORDANT UN CONDUCTEUR DE COURANT NORMAL À UN SUPRACONDUCTEUR ÉLECTRO-CONDUCTEUR

(30) Priorität: 25.02.2019 LU 101151
(43) Veröffentlichungstag der Anmeldung: 26.08.2020
(73) Patentinhaber: Vision Electric Super Conductors GmbH, 67657 Kaiserslautern (DE)
(72) Erfinder: REISER, Wolfgang, 67657 Kaiserslautern (DE); HUWER, Stefan, 67715 Geiselberg (DE)
(74) Vertreter: Gille Hrabal Partnerschaftsgesellschaft mbB Patentanwälte

(56) Entgegenhaltungen:
- EP-A2- 0 808 009
- DE-C1- 3 939 109

## Beschreibung

Die Erfindung betrifft ein Übergangsstück, das einen Normalstromleiter mit einem Supraleiter elektrisch leitend verbindet, wobei insbesondere das Übergangsstück einen Behälter zur Aufnahme einer kryogenen Kühlflüssigkeit aufweist und der Normalstromleiter im Behälter in vertikaler Richtung von oben nach unten in den Behälter ragt. Zumindest im Bereich des Supraleiters muss das Übergangsstück durch ein flüssiges kryogenes Kühlmittel oder Kühlflüssigkeit auf die erforderliche kryogene Temperatur heruntergekühlt werden.

Übergangsstücke als Stromzuführungen werden benötigt um elektrischen Strom von Normalstromleitern, also beispielsweise Stromschienen aus massivem Kupfer, bei Umgebungstemperatur im Bereich einer warmen Temperatur von ca. 260 bis 330 Kelvin in supraleitende Stromschienen mit einer kalten Temperatur von ca. 20 bis 80 Kelvin einzuleiten, dem derzeitigen Temperaturbereich für Hochtemperatursupraleiter bei den üblichen Siedetemperaturen der verwendbaren verflüssigten Gase und Gasgemische, wie Stickstoff, Neon, Wasserstoff. Bei Tieftemperatursupraleitung mit Helium liegt sogar eine tiefkalte Temperatur von ca. 2-4 Kelvin vor.

EP 0 694 200 offenbart unter Nutzung der Gaskühlung den Wärmeeintrag aus der Umgebung über den massiven Normalstromleiter reduzieren. Dabei verdampft Kühlmittel unter Nutzung der Verdampfungsenthalpie und hält so die Flüssigphase des Kühlmittels auf kryogener Temperatur. Diese Art der Kühlung erfordert einen ständigen Zustrom von flüssigem Kühlmittel von einer externen Quelle, beispielsweise einem Tank, der in regelmäßigen Abständen nachgefüllt wird. Eine Verminderung des Wärmeeintrags bedeutet in diesem Fall eine Verbrauchsreduzierung an Flüssigkühlmittel. Diese Bauart erfordert eine Füllstandregelung des Behälters, um die aus dem externen Tank nachzufüllende Menge zu kontrollieren.

Ferner ist bekannt, die Rückkühlung des verdampften Kühlmittels, dessen erneute Verflüssigung mittels Kälteeintrags und die unmittelbare Rückführung des wieder verflüssigten Kühlmittels in das Flüssigreservoir im unteren Teil des Behälters. Das erfordert einen oder mehrere handelsüblichen Kühler für kryogene Temperaturen, die beispielsweise mit elektrischem Strom betrieben werden. Diese Art der Kühlung benötigt eine sichere elektrische Versorgung des Kühlers und regelmäßige Wartungsintervalle, insbesondere bei Kühlern kleiner bis mittlerer Leistung im Bereich von 20 bis 2.000 Watt, die entweder eine Unterbrechung der Kühlung oder Redundanz erfordern. Eine Verminderung des Wärmeeintrags bedeutet in diesem Fall eine Verminderung des Stromverbrauchs, wenn die Kühlleistung regelbar ist. Diese Bauart erfordert eine Druckregelung des Behälters, da die Menge des Kühlmittels im Zweiphasenkreislauf konstant bleibt und eine größere Gasmenge bei etwas kleinerer Flüssigkeitsmenge einer Druckerhöhung gleichkommt.

Ein typisches Übergangsstück als Stromzuführung hat einen aus der Umgebungstemperatur kommenden Normalleiter als Zuleitung zu dem Supraleiter. Es ergibt sich dabei folgender Zielkonflikt:
Der Normalleiter im Bereich des Übergansstücks ist zur Minimierung des Wärmeeintrages vom warmen in den kalten Bereich möglichst querschnittsarm auszulegen, um den vom Wärmestrom über Wärmeleitung gering zu halten. Gleichzeitig ist der Normalleiter mit möglichst großem Querschnitt auszulegen um bei Stromfluss den Wärmeeintrag durch ohmsche Wärme gering zu halten. Es ist bekannt den Zielkonflikt durch ein für den Nennstrom und die Temperaturdifferenz optimiertes Verhältnis von Stromstärke I, thermisch wirksamer Länge L und Querschnitt A zu lösen. Im kalten Bereich, also im Kühlmittel eintauchend, werden die in Draht- oder Bandform vorliegenden Supraleiter in einer elektrischen Kontaktzone mit dem Normalleiter elektrisch verbinden. Die einfachste Bauart eines Übergangsstück wäre ein Normalleiterstab gleichen Querschnitts über die gesamte Leitungslänge vom Warmen ins Kalte. Der Wärmeeintrag im Bereich des Übergangsstücks liegt meist um Größenordnungen über dem Wärmeeintrag der sehr gut isolierten supraleitenden Stromschiene. Daher ist die Neutralisierung des Wärmeeintrags im Bereich des Übergangsstücks wesentlicher Bestandteil der Energiebilanz und somit Betriebskosten einer supraleitenden elektrischen Verbindung im Hochstrombereich.

Daher offenbart DE 1 665 940 eine wärmeeintragsreduzierende Bauartmit einem Normalleiter, dessen Querschnitt über die Gesamtlänge von warm nach kalt stufenweise abnimmt. Diese Bauart wird auch mit Wärmetauschern kombiniert, die an verschiedenen Stellen entlang des Verlaufs von warm nach kalt, die Wärme auf verschiedenen Temperaturniveaus herausnehmen können.

Die oben beschriebenen Stromzuführungen für diese Temperaturbereiche unterscheiden nicht zwischen Volllastbetrieb und Teillastbetrieb oder sogar Nulllastbetrieb. Variable Betriebsbedingungen liegen außerhalb der oben beschriebenen optimierten Auslegung und führen zu erhöhtem Wärmeintrag, entweder durch Wärmeleitung oder ohmsche Wärme: Im Falle von Teillast ist beim einfachen Leiterstab das Verhältnis von Stromstärke, Länge und Querschnitt nicht mehr optimal, da der Strom zwar niedriger ist, aber Länge und Querschnitt unverändert bleiben. Dadurch fließt mehr Wärme ins Kalte als eigentlich bei optimalem Verhältnis von Stromstärke, Länge und Querschnitt nötig wäre. Typische Teillastfälle in Hochstromanwendungen gibt es beispielsweise bei der Herstellung von Graphitelektroden für die Stahlindustrie in Form von Hochfahrkurven über den Zeitraum von mehreren Stunden für den Graphitisierungsstrom, der von wenigen Kiloampere nach und nach auf Werte von über 200 kA erhöht wird oder bei der Anbindung von großen Solarparks, bei denen tagsüber ein Strom von mehreren kA, bei Schlechtwetterlage nur ein Teilstrom und in der Nacht gar kein Strom fließt oder bei Windenergieanlagen mit dem bekannten volatilen Einspeiseverhalten,

DE 2 901 892 und EP 0 789 368 offenbaren zur Reduzierung des Wärmeintrags Schaltmechanismen zum vollständigen Unterbrechen der Leiter zwischen warm und kalt, so dass bei Teillast kein Vorteil erreicht wird.

DE 10 324 500 offenbart die Veränderung des wärme- und stromleitenden Querschnitts des Normalleiters durch die Änderung einer Kontaktfläche zwischen warmer und kalter Seite des Normaleiters, so dass im Teillastfall nicht unnötig viel Wärme in den kalten Bereich transportiert wird.

KR 10 2010 002 6288 A offenbart eine Stromzuführung, bei der die Länge mittels eines Schraubengewindes verändert wird

US 4 209 658 offenbart lastabhängig durch Verstellung eines Kolbens die erforderliche thermische Länge für das optimale Verhältnis von Strom, Länge und Querschnitt zu erreichen.

Die vorgenannten Veröffentlichungen haben allesamt den Nachteil, dass mechanische Verstell-Mechanismen erforderlich sind, die üblicherweise nicht über sehr lange Zeiträume wartungsfrei betrieben werden können oder sich nicht eignen für die Übertragung sehr großer Ströme in der Größenordnung von 20 bis 300 kA, da die Verlustwärme an Kontaktstellen oder Übergangsstellen erheblich sein kann und damit das Ziel der Minimierung des Wärmeeintrags konterkariert wird.

EP 0 808 009 A2 offenbart ein Übergangsstück, das einen Normalstromleiter mit einem Supraleiter elektrisch leitend verbindet mit den Merkmalen des Oberbegriffs des Hauptanspruchs der Erfindung, DE 39 39 109 C1 offenbart einen Kühlmittelbehälter mit einem tiefer liegenden Pufferbehälter.

Es ist daher Aufgabe der Erfindung, ein verbessertes Übergangsstück, das einen Normalstromleiter mit einem Supraleiter elektrisch leitend verbindet zu schaffen.

Diese Aufgabe wird gelöst durch ein Übergangsstück, das einen Normalstromleiter mit einem Supraleiter elektrisch leitend verbindet mit den Merkmalen des Hauptanspruchs. Vorteilhafte Ausgestaltungen sind Gegenstand der Unteransprüche.

Notwendigerweise verbindet das Übergangsstück einen Normalstromleiter elektrisch leitend mit einem Supraleiter. Normalstromleiter sind klassische elektrische ohmsche Leiter mit geringem elektrischen Widerstand bei Umgebungstemperaturen. Da zumindest im Bereich des Supraleiters das Übergangsstück durch eine flüssige kryogene Kühlflüssigkeit auf die erforderliche kryogene Temperatur heruntergekühlt werden muss, umfasst das Übergangsstück einen Behälter zur Aufnahme einer kryogenen Kühlflüssigkeit. Dabei ragt der Normalstromleiter im Behälter in vertikaler Richtung von oben nach unten in den Behälter, wie aus dem Stand der Technik bekannt.

Bei dem Supraleiter handelt es sich vorzugsweise um Hochtemperatursupraleiter, weshalb als Kühlflüssigkeit verflüssigte Gase und Gasgemische, wie Stickstoff, Neon oder Wasserstoff bevorzugt sind.

Als Besonderheit ist nun zunächst vorgesehen, dass der Normalstromleiter eine Vielzahl von unteren Enden aufweist. Diese unteren Enden erstrecken sich in vertikaler Richtung nach unten unterschiedlich tief und bilden dabei in vertikaler Richtung nach unten gegeneinander Überstände aus. Diese können dabei stufenartig ausgebildet sein. Von unten nach oben nimmt daher stufenartig der wärmeleitende Querschnitt des Normalleiters in der horizontalen Ebene zu. Die horizontale Ebene verläuft zwangsläufig parallel zur Oberfläche der Kühlflüssigkeit.

Eine weitere Besonderheit ist, dass elektrische Kontaktzonen zwischen dem Normalstromleiter und dem Supraleiter zumindest im Bereich der Überstände vorgesehen sind. Wenn ein Überstand in die Kühlflüssigkeit eingetaucht ist, dann herrscht im Bereich der dort befindlichen elektrischen Kontaktzone eine Temperatur unterhalb der Sprungtemperatur des jeweiligen Supraleiters und der Strom kann widerstandsfrei bis in die Kontaktzone fließen und oberhalb der Kontaktzone durch den Normalleiter fließen. Die anderen Kontaktzonen, welche gegebenenfalls oberhalb der Kühlflüssigkeit liegen, weisen dagegen Supraleiter oberhalb der Sprungtemperatur auf, deren elektrischer Widerstand im Vergleich so hoch ist, dass durch diese kein Strom in den Normalleiter fließt. Die jeweiligen Supraleiter werden in der Regel von der jeweiligen elektrischen Kontaktzone nach unten weggeführt, damit sie in der Kühlflüssigkeit liegen und somit unterhalb der Sprungtemperatur gehalten werden. Es reicht aber, wenn die jeweiligen Supraleiter von der elektrischen Kontaktzone so weggeführt werden, beispielsweise schräg nach unten oder horizontal, dass sie gleichzeitig mit dieser in der Kühlflüssigkeit liegen.

Durch eine Füllstandregelung zur Regelung der Füllstandhöhe der kryogenen Kühlflüssigkeit im Behälter im Bereich der Überstände, können von unten nach oben zunehmend viele Überstande mit ihren jeweiligen Kontaktzonen geflutet werden, sodass dabei gleichzeitig die unerwünschte Wärmeleitfähigkeit durch den massiven Normalleiter ansteigt aber gleichzeitig die Stromtragfähigkeit durch die zunehmenden elektrischen Kontaktzonen zunimmt. Es wird damit eine Teillastregelung geschaffen, die anders als der Stand der Technik ohne jede mechanische Bewegung von Normalleitern und insbesondere widerstandsreiche Übergänge zwischen Normalleitern auskommt. Die vorliegende Erfindung ist daher eine für Teillastfälle optimierte wartungsfreie Ausgestaltung mit minimaler Wärmeeinleitung. Es findet insbesondere keinerlei Mechanik im stark thermisch wechselbelasteten Bereich statt.

Da sämtliche elektrische Kontaktzonen und Überstände in einem einzigen gemeinsamen Behälter liegen, insbesondere kompakt nebeneinander als Bündel angeordnet, kann durch einfaches Verändern einer Füllstandshöhe zugleich nacheinander eine Vielzahl von freien unteren Enden thermisch in Kontakt mit der Kühlflüssigkeit gebracht werden. Der Aufbau mit einem einzigen Behälter mit den im Prinzip unbegrenzt vielen elektrischen Kontaktzonen und Überständer ermöglicht ohne weitere bauliche Maßnahmen ein beliebig feine Teillastregelung.

Der Normalstromleiter kann im einfachen Fall ein einziger massiver Leiter ausgebildet sein, der unten abgestuft ist durch die Überstände. Vorzugsweise ist aber eine Vielzahl von Einzelnormalstromleitern vorgesehen, die jeweils in einem der unteren Enden münden, beispielsweise eine Vielzahl paralleler Drähte oder Bänder, die unterschiedlich tief in den Behälter ragen, wodurch deren untere Enden die Überstände mit den elektrischen Kontaktzonen bilden. Einzelnormalstromleiter, die vorzugsweise voneinander thermisch getrennt sind, bzw. durch Abstand oder Isoliermaterial. Dies reduziert im Teillastbereich den Wärmeeintrag über den Normalleiter, da nur der im Bereich der Überstandes vorliegende Einzelnormalleiterquerschnitt an der Wärmeleitung beteiligt ist. Jeder Einzelnormalstromleiter mit über die Kontaktzone verbundenem Einzelsupraleiter kann daher mit oben beschriebenem optimalem Verhältnis von Stromstärke, Länge und Querschnitt ausgelegt sein. Daher erfolgt sogar jeder Teillastbetrieb unter diesen optimierten Bedingungen.

Besonders einfach ist der Aufbau, wenn mehrere Normalleiterbänder durch Pressschweißen zu einem Stapel versschweißt sind und dabei die unteren Enden der Normalleiterbänder nicht miteinander verschweißt werden. Diese sind dann unterschiedlich lang zur Ausbildung der Überstände und tragen die Kontaktzonen mit den Supraleiterbändern. Insbesondere ist gewährleitet, dass der gesamte Normalleiter von der jeweiligen Kontaktzone bis aus dem Übergangsstück heraus komplett ohne eine Materialübergang geführt ist. Es werden also insbesondere nicht die Einzelnormalleiter an einen massiven oberen Normalleiter angeschweißt, gelötet oder gepresst.

Auf vorhandene Bauelemente kann zurückgegriffen werden, wenn der Supraleiter eine Vielzahl von Einzelsupraleitern, insbesondere Supraleiterbänder, aufweist, welche jeweils in einer der elektrischen Kontaktzonen münden. Die Bänder können dann wie üblich über die lange Strecke (Supraleiterstromschiene) gestapelt geführt werden.

Zweckmäßigerweise sind die Einzelnormalstromleiter und/oder die Einzelsupraleiter elektrisch parallel geschaltet. Daher muss im Teillastfall keine aktive und widerstandsbehaftete elektrische An/Aus- Schaltung der einzelnen Strompfade erfolgen. Der Strom sucht sich selber den Weg des geringsten Widerstandes.

Vorzugsweise ist eine weitere Kontaktzone an dem obersten der unteren Enden, welches keinen Überstand bildet, vorgesehen ist.

Wenn alle Kontaktzonen nach oben in einer gemeinsamen Höhe enden, kann bei Volllast der volle Strom durch alle Supraleiter fließen. Anderenfalls müsste nämlich ein Teil des Stromes eine längere Strecke durch den unterkühlten Normalleiter unterhalb des Flüssigkeitsstandes bis zum Übergang zum Supraleiter fließen. Dadurch ergäbe sich ein kleiner Widerstandsunterschied, da der Strom in diesem Einzelnormalleiter einen geringfügig längeren Weg zurücklegen muss, als in dem benachbarten kürzeren Einzelnormaleiter.

Zu optimalen Ausnutzen der Möglichkeiten von Teillast-, Volllast- und Nulllast-Betrieb ist die Füllstandsregelung derart ausgelegt, dass die Füllstandshöhe
- auf ein Niveau unterhalb des untersten Endes der Vielzahl der unteren Enden regeln kann (Nulllast); und
- auf ein Niveau oberhalb der obersten Kontaktzone (Volllast) und/oder
- auf alle Zwischenniveaus und/oder
- stufenweise auf Zwischenniveaus bei welchen nacheinander die jeweiligen unteren Enden frei von Kühlflüssigkeit sind. Damit ist sichergestellt, dass in den unterschiedlichen Teillastbereichen nur diejenigen unteren Enden wärmeleitend mit der Kühlflüssigkeit in Verbindung stehen, deren Kontaktzonen mit einem unterhalb der Sprungtemperatur gekühlten Supraleiter in Verbindung stehen.

Die Füllstandregelung kann nach fachmännischen Wissen aus dem Stand der Technik ausgelegt sein.

Vorzugsweise umfasst aber die Füllstandregelung Mittel zum Verdampfen oder Nachfüllen der kryogenen Kühlflüssigkeit, derart, dass zur Niveauabsenkung durch Wärmeeintrag Kühlflüssigkeit verdampfen kann und zur Niveauanhebung Kühlflüssigkeit dem Behälter zugefügt werden kann. Diese Methode eignet sich nicht für schnelle Laständerungen.

Schnellere Niveauänderungen sind möglich, wenn der Behälter mit einem Pufferbehälter verbunden ist: zur Niveauabsenkung kann Kühlflüssigkeit aus dem Behälter in den Pufferbehälter verlagert werden kann und zur Niveauanhebung umgekehrt aus dem Pufferbehälter in den Behälter. Dies kann insbesondere durch eine Flüssigkeitspumpe erfolgen, was aber bei den benötigten Temperaturen schwierig ist.

Daher ist vorzugsweise eine Verdrängungsvorrichtung zum Verdrängen der Flüssigkeit aus dem Behälter in den Pufferbehälter oder umgekehrt vorgesehen. Darunter fallen viele technische Möglichkeiten, insbesondere Verdrängen der Flüssigkeit
- durch Stauchung oder Expansion eines insbesondere druckdichten Behälters und/oder Pufferbehälters;
- durch Druckerhöhung oder Druckreduktion des druckdichten Behälters und/oder Pufferbehälters;
- durch Anheben oder Absenken Behälters relativ zum Pufferbehälter;

Eine besonders wartungsarme, schnell wirkende und technisch einfache Lösung sieht vor, dass der Behälter und/oder der Pufferbehälter im Bereich oberhalb der im Betrieb notwendigen jeweiligen Füllstandhöhen gasdicht sind. Somit kann der Gasraum zur Hebung/Senkung des Füllstandes mit Druck beaufschlagt werden ohne dass die Flüssigkeit mechanisch manipuliert werden muss.

Vielmehr wird nur eine einfache Gaspumpvorrichtung, z.B. eine Membranpumpe, benötigt, mittels welcher Gas, insbesondere die verdunstete Kühlflüssigkeit, oberhalb der im Behälter und/oder Pufferbehälter stehenden Kühlflüssigkeit eingebracht, abgesaugt oder zwischen Behälter und/oder Pufferbehälter verschoben werden kann. Vorzugsweise wirkt dabei die Pumpe in eine Richtung zum Aufbauen des Drucks, während für die umgekehrte Fließrichtung des Gases einfach ein parallel zur Pumpe angeordnetes Ventil zum Druckausgleich vorgesehen sein kann. Dieses kann geöffnet werden, damit die Füllstände in den beiden Behältern wieder ein gleiches Niveau einnehmen.

Druckunterscheide könne auch durch wechselweise in einem der beiden Behältern betreibbare oder wirkende Kühler erreicht werden. Im zusätzlich gekühlten Behälter steigt durch Kondensation des gasförmigen Kühlmediums der Flüssigkeitsstand.

Zweckmäßigerweise sind mit der Füllstandregelung verbundene Sensoren zum Ermitteln der Füllstandhöhe in dem Behälter und/oder dem Pufferbehälter vorgesehen.

Ein einfacher, kompakter damit den Wärmeaustausch mit der Umgebung reduzierender Aufbau sieht vor, dass der Behälter im Inneren des Pufferbehälters angeordnet ist. Wenn dabei der Behälter nur unterhalb des untersten der unteren Enden der Normalleiter mit dem Pufferbehälter verbunden ist zum Zu- bzw. Abfluss von Kühlflüssigkeit aus dem Behälter, dann die kommunizieren Behälter ähnlich wie kommunizierende Röhren, wobei durch Druckdifferenzen oberhalb des Flüssigkeitsspiegels dieser ins Ungleichgewicht gebracht werden und damit nach unten/oben gedrückt/gesaugt werden kann, wie oben bereits beschrieben.

Erfindungsgemäß kann daher bei Nulllast bzw. Nullstrom die thermische Verbindung zwischen dem oberen warmen Ende und unterem kalten Ende des Normalleiters nahezu vollständig unterbrochen werden, da der Füllstand der kryogenen Kühlflüssigkeit auf ein Niveau unterhalb des normalleitenden Strompfadquerschnittes abgesenkt werden kann und die daran angeschlossenen Supraleiter nahezu keinen Strom übertragen müssen. Ein minimaler Restquerschnitt in der Größenordnung von 1 % verbleibt, da die Supraleiter in aller Regel durch ein gut elektrisch leitfähiges Material stabilisiert sind und damit auch ein kleiner Querschnitt an gut wärmeleitendem Material ins Kalte führt.

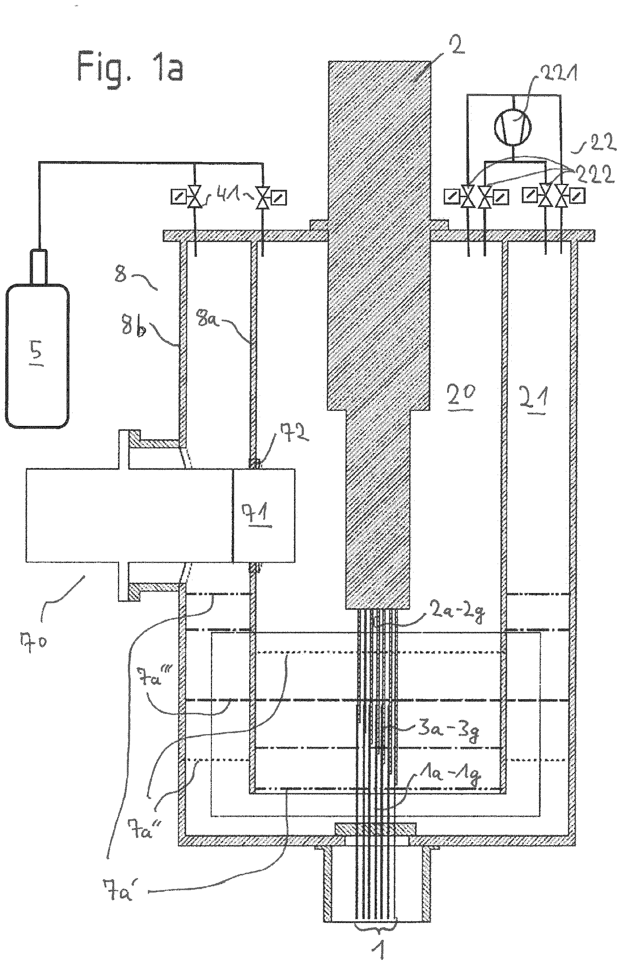

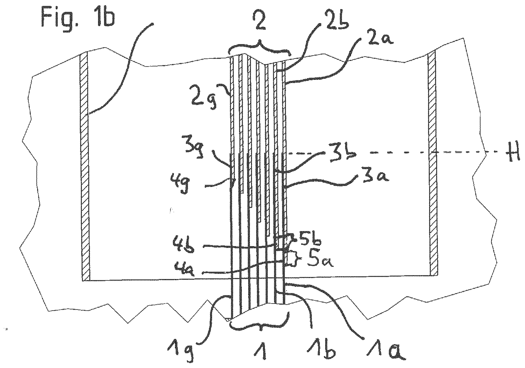

Im Folgenden wird die Erfindung anhand von Zeichnungen erläutert, ohne darauf beschränkt zu sein. Es zeigt Fig. 1a eine Ausführungsform mit Füllstandregelung mittels Gasdruck und Fig. 1b ein Detail der Fig. 1a im Bereich der Kontaktzonen.

Fig. 1a zeigt das teillastoptimierte Übergangsstück bzw. Stromzuführung mit Niveauregulierung des Füllstandes 7a', 7a", 7a‴ der kryogenen Kühlflüssigkeit. Dabei wird durch einen senkrecht stehenden vakuum- und superisolierten Behälter 8 der Strompfad 2, 3, 1 von oben nach unten durchgeführt, mit gasdichten Durchführungen an der oberen, warmen Seite und einer kryoflüssigskeitsdichten Durchführung an der unteren, kalten Seite.

Unter Bezug auf Fig. 1b wird der erfindungsgemäße Übergang von Normalleiter 2 zur Supraleiter 1 erläutert, wobei hier eine Vielzahl von parallel verlaufenden Einzelnormalleiter 2a - 2g und Einzelsupraleiter 1a - 1g dargestellt sind. Die Einzelnormalstromleiter 2a - 2g verlaufen im Behälter 8a in vertikaler Richtung von oben nach unten und ragen in den Behälter 8a. Die Einzelnormalstromleiter 2a - 2g bilden eine Vielzahl von unteren Enden 4a - 4g. Dabei erstrecken sich die unteren Enden 4a - 4g in vertikaler Richtung nach unten unterschiedlich tief und bilden daher in vertikaler Richtung nach unten gegeneinander eine Vielzahl von Überständen 5a - 5g aus, die relativ zueinander sind. Ein Überstand ist ein Bereich, der tiefer als das untere Ende eines anderen Einzelnormalstromleiters liegt, der die nächstmögliche geringere Tiefe aufweist. Ferner sind elektrische Kontaktzonen 3a - 3g zwischen dem Einzelnormalstromleitern 2a - 2g und den Einzelsupraleiterbändern 1a - 1g zumindest im Bereich der Überstände 5a - 5g vorgesehen.

Außerdem enthält der Behälter 8a zum Zwecke der Messung des Flüssigkeitspegels 7a', 7a", 7a‴ eine handelsübliche nicht dargestellte Füllstandmesseinrichtung oder eine Reihe von senkrecht nacheinander angeordneten Temperatursensoren, mit Abständen, die den abgestuften Überständen 5a - 5g der Einzelnormalleiter 2a - 2g des Strompfades im gewünschten Verhältnis entsprechen. Damit kann auf jeder gewünschten Stufe die kryogene Temperatur der Flüssigkeit erfasst und so der Füllstand stufenweise bestimmt werden, was für die hier beschriebene Bauart der Stromzuführung genau genug ist.

Im einfachsten Fall, der hier nicht dargestellt ist, könnte zur Regelung des Füllstandes die Nachfüllmenge von einem externen Tank der Füllstand des Behälters,verändert werden. Die Zeitkonstante dieser Regelung ist aber groß und liegt mindestens im Bereich von mehreren Minuten, da zur Reduzierung des Füllstands darauf gewartet werden muss, dass genügend Kühlmittel durch den Wärmeeintrag des Strompfades verdampft und sich damit nach und nach der Füllstand absenkt. Auch das Nachfüllen aus dem Tank um den Füllstand nötigenfalls bei anstehender Volllast wieder auf die volle Höhe zu bringen benötigt etwas Zeit. Diese einfache Art der Regelung kommt daher nur für längere, planbare Teil- oder Nullastphasen in Frage, wie etwa in der Photovoltaikanwendung bei Schlechtwetterphasen oder bei Nacht.

Bevorzugt ist daher zur schnellen Niveauregulierung des Füllstandes 7a', 7a", 7a‴ der kryogenen Kühlflüssigkeit mit einer kleinen Zeitkonstante im Bereich von wenigen Sekunden die in Fig. 1a angedeutete Lösung: Durch einen senkrecht stehenden vakuum- und superisolierten Behälter 8b wird der Strompfad 2, 3, 1 von oben nach unten durchgeführt, mit gasdichten Durchführungen an der oberen, warmen Seite des Normalleiters 2 und einer kryoflüssigskeitsdichten Durchführung an der unteren, kalten Seite um die Supraleiter 1 herum. In diesem steht die kryogene Kühlfüssigkeit.

Im Inneren des äußeren Behälters 8b, der als Pufferbehälter dient, erstreckt sich von der oberen Seite nach unten ein zusätzlicher innerer Behälter 8a, der den Strompfad 2, 3, 1 zumindest oberhalb der frei geführten Supraleiter 1a - 1g umgibt. Dieser ist nach unten offen und reicht bis unterhalb des untersten Endes 4a der Einzelnormalleiter 2a - 2g und taucht in die kryogene Kühlflüssigkeit ein, deren Füllstände in den Behältern 8a, 8b die beispielhaft dargestellten gegenläufigen Niveaus 7a', 7a", 7a‴ einnehmen können. Die beiden Behälter 8a, 8b bilden daher getrennt durch die Kühlflüssigkeit zwei getrennte Gasräume 20, 21 innerhalb der Behälter. Ein innerer Raum 20 zwischen Strompfad und dem inneren Behälter 8a, sowie ein äußerer Ringraum 21 zwischen dem inneren Behälter 8a und der Behälterinnenwand der äußeren Behälters 8b. Die beiden Räume 20, 21 stehen unterhalb der unteren Öffnung des inneren Behälters 8a über die Kühlflüssigkeit miteinander in Verbindung und bilden ein System ähnlich der kommunizierenden Röhren. Oberhalb des Flüssigkeitsspiegels ergeben sich dadurch der innere Gasraum 20 und ein äußerer Gasraum 21. Der äußere Behälter 8b dient dabei als Ausgleichsbehälter oder Pufferbehälter für die aus dem inneren Behälter 8a verlagerte Kühlflüssigkeit. Die beiden Gasräume 21, 20 können beliebig realisiert werden, z.B. durch einen Pufferbehälter innerhalb des Inneren Behälters 8a, der neben dem Strompfad verläuft, anstatt ihn konzentrisch zu umgeben. Eine weitere mögliche Variante ist eine einfache senkrechte Trennwand im inneren Behälter 8a, die neben dem Strompfad angebracht wird und den Behälter innen aufteilt, wie beispielsweise eine Sehne den Kreis. Wichtig ist dabei immer zwei voneinander getrennte Gasräume bereitstellen zu können, die es durch Druckunterschiede erlauben unterschiedliche Flüssigkeitshöhen einzustellen.

Die Behälter verfügen über eine Pumpvorrichtung 22, die mit den beiden Gasräumen 21, 20 oberhalb des Flüssigkeitsspiegels 7a', 7a",7a‴in Verbindung steht und die einen Druckunterschied zwischen den beiden Gasräumen erzeugen kann, beispielsweise in Form einer Vakuumpumpe, eines Lüfters oder eines Verdichters 221. Die Förderrichtung kann über Magnetventile 222 und entsprechende Rohrleitungen bestimmt werden.

Des Weiteren können die Behälter 8a, 8b zum schnellen Druckausgleich über eine zu- und abschaltbare Verbindung der beiden Gasräume 21, 20 oberhalb des Flüssigkeitsspiegels verfügen, beispielsweise in Form von Ventilen 41, pneumatisch betätigt, elektrisch betätigt oder mit Stellantrieb. Diese können ferner auch mit einem externen Drucktank 5 verbunden sein, der über die Ventile 41 wechselweise die beiden Gasräume 20, 21 unter Druck setzen kann.

In jedem Fall wird die Niveauregulierung des Füllstandes der kryogenen Kühlflüssigkeit dadurch erreicht, dass durch die Pumpvorrichtung 22 ein Druckunterschied in den beiden Gasräumen 20, 21 erzeugt wird, wodurch die unten kommunizierenden Flüssigkeitsspiegel unterschiedliche Füllstande annehmen können. Durch die Messsignale der Sensoren zur Messung der Füllstände wird mittels der nicht gezeigten Füllstandregelung die Intensität der Pumpvorrichtung 22 und somit die Druckdifferenz reguliert.

Der obere Teil des Normalleiters kann zur Reduzierung der in das System eingebrachten Wärmmenge von oben nach unten vorgekühlt werden durch die zu diesem Zweck aus dem Stand der Technik bekannten Maßnahmen, z.B. Wärmetauscher oder Gaskühlung, gegebenenfalls mit Rückkühler.

Im Falle der Rückkühlung ist der Kühler 70 so angeordnet, dass der kalte Teil des Kühlers, der Kondensator 71, von außen durch den äußeren Pufferbehälter 8b, durch den äußeren Gasraum 21 und durch die Wand des inneren Behälters 8a mittels ausreichend gasdichter Durchführung 72 in den inneren Gasraum 20 hineinragt, so dass Gas aus beiden Gasräumen gleichzeitig kondensiert. Die Leistung des Kühlers wird so groß gewählt, dass eine vollständige Rekondensation des verdampften Kühlmittels erfolgen kann und darüber hinaus noch eine Reservekühlleistung zu Verfügung steht. Es kann aus diesem Grund auch erforderlich sein mehrere Kühler zu verwenden.

Druckunterschiede zwischen innerem und äußerem Ringraum werden durch die Pumpvorrichtung erzeugt, wobei der Kondensator 71 des Kühlers mit dem äußeren Gasraum 21 in Verbindung steht, so dass im Voll- und Überlastfall im Bereich des Kondensators der höhere Druck vorherrscht und dadurch etwas günstigere Rekondensationsbedingungen vorliegen.

Für den erforderlichenfalls schnellen Druckausgleich bei Lastwechsel sind Ventile 41 vorgesehen, die die zwei Gasräume 20, 21 verbinden oder trennen können, je nach Anforderung. Beim Umschalten von Teillast auf Volllast wird die Verbindung über Ventil 41 geöffnet, beim Umschalten in umgekehrter Richtung die Verbindung geschlossen. Der Tank 5 aus Fig. 1a ist dazu nicht erforderlich.

## Patentansprüche

1. Übergangsstück, das ein Normalstromleiter (2) mit einem Supraleiter (1) elektrisch leitend verbindet, wobei:
das Übergangsstück einen Behälter (8,8a,8b) zur Aufnahme einer kryogenen Kühlflüssigkeit aufweist,
der Normalstromleiter (2) im Behälter in vertikaler Richtung von oben nach unten in den Behälter (8) ragt und eine Vielzahl von unteren Enden (4a,4b) aufweist;
die unteren Enden (4a,4b) sich in vertikaler Richtung nach unten unterschiedlich tief erstrecken und dabei in vertikaler Richtung nach unten gegeneinander Überstände (5a,5b) ausbilden;
elektrische Kontaktzonen (3a,3b) zwischen dem Normalstromleiter (2a,2b) und dem Supraleiter (1a,1b) zumindest im Bereich der Überstände (5a,5b) vorgesehen sind, und
eine Füllstandregelung vorgesehen ist zur Regelung der Füllstandhöhe (7a', 7a") der kryogenen Kühlflüssigkeit im Behälter (8,8a,8b) im Bereich der Überstände (5a,5b) oder elektrischen Kontaktzonen (3a,3b),
**dadurch gekennzeichnet, dass**
die Füllstandregelung derart ausgelegt ist, dass
die Füllstandregelung die Füllstandhöhe (7a', 7a") der kryogenen Kühlflüssigkeit im Behälter (8,8a,8b) im Bereich der Überstände (5a,5b) oder elektrischen Kontaktzonen (3a,3b) von unten nach oben mit zunehmender Last reguliert; und
die Füllstandregelung die Füllstandhöhe (7a', 7a") der kryogenen Kühlflüssigkeit im Behälter (8,8a,8b) im Bereich der Überstände (5a,5b) oder elektrischen Kontaktzonen (3a,3b) von oben nach unten mit abnehmender Last reguliert.

2. Übergangsstück nach Anspruch 1, **dadurch gekennzeichnet, dass** der Normalstromleiter (2) eine Vielzahl von Einzelnormalstromleitern (2a,2b) aufweist, welche jeweils in einem der unteren Enden (4a,4b) münden.

3. Übergangsstück nach Anspruch 1 oder 2, **dadurch gekennzeichnet, dass** der Supraleiter eine Vielzahl von Einzelsupraleitern (1a, 1b), insbesondere Supraleiterbänder, aufweist, welche jeweils in einer der elektrischen Kontaktzonen (3a,3b) münden und elektrisch kontaktiert sind.

4. Übergangsstück nach einem der vorherigen Ansprüche, **dadurch gekennzeichnet, dass** die Einzelnormalstromleiter und/oder die Einzelsupraleiter elektrisch parallel geschaltet sind.

5. Übergangsstück nach einem der vorherigen Ansprüche, **dadurch gekennzeichnet, dass** eine weitere Kontaktzone (3g) an dem obersten der unteren Enden (4g), welches keinen Überstand bildet, vorgesehen ist,

6. Übergangsstück nach einem der vorherigen Ansprüche, **dadurch gekennzeichnet, dass** alle Kontaktzonen (3a,3b,3g) in vertikaler Richtung nach oben in einer gemeinsamen Höhe (H) enden.

7. Übergangsstück nach einem der vorherigen Ansprüche, **dadurch gekennzeichnet, dass** die Füllstandsregelung (24) die Füllstandshöhe auf ein Niveau unterhalb des untersten Endes (4a) der Vielzahl der unteren Enden regeln kann und/oder auf ein Niveau oberhalb der obersten Kontaktzone und/oder auf alle Zwischenniveaus und/oder stufenweise auf Zwischenniveaus bei welchen nacheinander die jeweiligen unteren Enden frei von Kühlflüssigkeit sind.

8. Übergangsstück nach einem der vorherigen Ansprüche, **dadurch gekennzeichnet, dass** die Füllstandregelung Mittel zum Verdampfen oder Nachfüllen der kryogenen Kühlflüssigkeit umfasst, derart, dass zur Niveauabsenkung durch Wärmeeintrag Kühlflüssigkeit verdampfen kann und zur Niveauanhebung Kühlflüssigkeit dem Behälter zugefügt werden kann.

9. Übergangsstück nach einem der vorherigen Ansprüche, **dadurch gekennzeichnet, dass** der Behälter (8a) mit einem Pufferbehälter (8b) derart verbunden ist, dass Kühlflüssigkeit zur Niveauabsenkung aus dem Behälter (8a) in den Pufferbehälter (8b) verlagert werden kann und zur Niveauanhebung aus dem Pufferbehälter in den Behälter verlagert werden kann.

10. Übergangsstück nach einem der vorherigen Ansprüche, **dadurch gekennzeichnet, dass** mittels einer Flüssigkeitspumpe oder einer Verdrängungsvorrichtung zum Verdrängen der Flüssigkeit aus dem Behälter in den Pufferbehälter verlagert werden kann oder umgekehrt.

11. Übergangsstück nach einem der vorherigen Ansprüche, **dadurch gekennzeichnet, dass** der Behälter (8a) und/oder der Pufferbehälter (8b) im Bereich (20, 21) oberhalb der im Betrieb notwendigen jeweiligen Füllstandhöhen gasdicht sind und die Verdrängungsvorrichtung (22) eine Gaspumpvorrichtung (221,222) umfasst, mittels welcher Gas, insbesondere verdunstete Kühlflüssigkeit, oberhalb der im Behälter und/oder Pufferbehälter stehenden Kühlflüssigkeit eingebracht, abgesaugt oder zwischen Behälter und/oder Pufferbehälter verschoben werden kann.

12. Übergangsstück nach einem der vorherigen Ansprüche, **dadurch gekennzeichnet, dass** mit der Füllstandregelung verbundene Sensoren zum Ermitteln der Füllstandhöhe in dem Behälter und/oder dem Pufferbehälter vorgesehen sind.

13. Übergangsstück nach einem der vorherigen Ansprüche, **dadurch gekennzeichnet, dass** der Behälter (8a) im Inneren des Pufferbehälters (8b) angeordnet ist und Behälter nur unterhalb des untersten der unteren Enden (4a) der Normalleiter (2a) mit dem Pufferbehälter (8b) verbunden ist zum Zu- bzw. Abfluss von Kühlflüssigkeit aus dem Behälter.

14. Verfahren zur Teillastregelung eines kryogekühlten Übergangsstücks, das einen Normalstromleiter (2) mit einem Supraleiter (1) elektrisch leitend verbindet, wobei der Normalstromleiter (2) im Behälter in vertikaler Richtung von oben nach unten in den Behälter (8) ragt und eine Vielzahl von unteren Enden (4a,4b) aufweist; die unteren Enden (4a,4b) sich in vertikaler Richtung nach unten unterschiedlich tief erstrecken und dabei in vertikaler Richtung nach unten gegeneinander Überstände (5a,5b) ausbilden; elektrische Kontaktzonen (3a,3b) zwischen dem Normalstromleiter (2a,2b) und dem Supraleiter (1a, 1b) zumindest im Bereich der Überstände (5a,5b) vorgesehen sind, **gekennzeichnet durch** folgende Schritte :
- Regulierung der Füllstandhöhe (7a', 7a") der kryogenen Kühlflüssigkeit im Behälter (8,8a,8b) im Bereich der Überstände (5a,5b) oder elektrischen Kontaktzonen (3a,3b) von unten nach oben mit zunehmender Last; und
- Regulierung der Füllstandhöhe (7a', 7a") der kryogenen Kühlflüssigkeit im Behälter (8,8a,8b) im Bereich der Überstände (5a,5b) oder elektrischen Kontaktzonen (3a,3b) von oben nach unten mit abnehmender Last.

15. Verfahren zur Teillastregelung nach dem vorherigen Anspruch, mit folgendem Schritt:
- Regulierung der Füllstandhöhe (7a', 7a") der kryogenen Kühlflüssigkeit durch Variation eines Gasdrucks oberhalb des Füllstandes.

## Claims

1. Transition piece which electrically connects a normal current conductor (2) to a superconductor (1), wherein:
the transition piece comprises a container (8,8a,8b) for receiving a cryogenic cooling liquid;
the normal current conductor (2) in the container extends vertically downward into the container (8) and comprises a plurality of lower ends (4a,4b);
the lower ends (4a,4b) extend vertically downward to different depths, forming protrusions (5a,5b) from each other in the downward vertical direction;
electrical contact zones (3a,3b) are provided between the normal current conductor (2a,2b) and the superconductor (1a,1b) at least in the region of the protrusions (5a,5b); and
a level control is provided for controlling the level (7a', 7a") of the cryogenic cooling liquid in the container (8, 8a, 8b) in the region of the protrusions (5a, 5b) or electrical contact zones (3a, 3b),
**characterized in that**
the level control is designed such that
the level control regulates the level (7a', 7a") of the cryogenic cooling liquid in the container (8, 8a, 8b) in the region of the protrusions (5a, 5b) or electrical contact zones (3a, 3b) from bottom to top with increasing load; and
the level control regulates the level (7a', 7a") of the cryogenic cooling liquid in the container (8, 8a, 8b) in the region of the protrusions (5a, 5b) or electrical contact zones (3a, 3b) from top to bottom with decreasing load; and.

2. Transition piece according to claim 1, **characterized in that** the normal current conductor (2) comprises a plurality of single normal current conductors (2a,2b) each terminating in one of the lower ends (4a,4b).

3. Transition piece according to claim 1 or 2, **characterized in that** the superconductor comprises a plurality of single superconductors (1a, 1b), in particular superconductor tapes, which each terminate in one of the electrical contact zones (3a,3b) and are electrically contacted.

4. Transition piece according to one of the preceding claims, **characterized in that** the single normal current conductors and/or the single superconductors are electrically connected in parallel.

5. Transition piece according to one of the preceding claims, **characterized in that** a further contact zone (3g) is provided at the uppermost of the lower ends (4g) which does not form a protrusion.

6. Transition piece according to one of the preceding claims, **characterized in that** all contact zones (3a,3b,3g) terminate at a common height (H) in the vertical direction upwardly.

7. Transition piece according to one of the preceding claims, **characterized in that** the level control (24) can control the level to a height level below the lowest end (4a) of the plurality of lower ends and/or to a height level above the uppermost contact zone and/or to all intermediate levels and/or stepwise to intermediate levels at which successively the respective lower ends are free of cooling liquid.

8. Transition piece according to one of the preceding claims, **characterized in that** the level control comprises means for evaporating or refilling the cryogenic cooling liquid, such that for height level reduction cooling liquid can be evaporated by heat input and for height level increase cooling liquid can be added to the container.

9. Transition piece according to one of the preceding claims, **characterized in that** the container (8a) is connected to a buffer container (8b) in such a way that cooling liquid can be transferred from the container (8a) to the buffer container (8b) for height level reduction and can be transferred from the buffer container to the container for height level increase.

10. Transition piece according to one of the preceding claims, **characterized in that** transferring can be performed by means of a liquid pump or a displacement device for displacing the liquid from the container into the buffer container or vice versa.

11. Transition piece according to one of the preceding claims, **characterized in that** the container (8a) and/or the buffer container (8b) are gas-tight in the region (20, 21) above the respective levels required in operation, and the displacement device (22) comprises a gas pumping device (221, 222) by means of which gas, in particular evaporated cooling liquid, can be introduced, extracted or displaced between the container and/or buffer container above the cooling liquid standing in the container and/or buffer container.

12. Transition piece according to one of the preceding claims, **characterized in that** sensors connected to the level control are provided for determining the level in the container and/or the buffer container.

13. Transition piece according to one of the preceding claims, **characterized in that** the container (8a) is arranged inside the buffer container (8b) and container is only connected to the buffer container (8b) below the lowermost of the lower ends (4a) of the normal conductors (2a) for the inflow and/or outflow of cooling liquid from the container.

14. Method of partial load control of a cryogenically cooled transition piece which electrically conductively connects a normal current conductor (2) to a superconductor (1), wherein the normal current conductor (2) in the container extends vertically downward into the container (8) and comprises a plurality of lower ends (4a,4b); the lower ends (4a,4b) extend vertically downwardly to different depths, forming protrusions (5a,5b) from each other in the downward vertical direction; electrical contact zones (3a,3b) are provided between the normal current conductor (2a,2b) and the superconductor (1a, 1b) at least in the region of the protrusions (5a,5b), **characterized by** the following steps :
- regulating the level (7a', 7a") of cryogenic cooling liquid in the container (8,8a,8b) in the region of the protrusions (5a,5b) or electrical contact zones (3a,3b) from bottom to top with increasing load; and
- regulating the level (7a', 7a") of cryogenic cooling liquid in the container (8,8a,8b) in the region of the protrusion (5a,5b) or electrical contact zones (3a,3b) from top to bottom with decreasing load.

15. Method of partial load control according to the preceding claim, comprising the following step:
- regulating the level (7a', 7a") of the cryogenic cooling liquid by varying a gas pressure above the level.

## Revendications

1. Pièce de transition reliant électriquement un conducteur de courant normal (2) à un supraconducteur (1), dans laquelle :
la pièce de transition présente un réservoir (8, 8a, 8b) pour la réception d'un liquide de refroidissement cryogénique ;
le conducteur de courant normal (2) dans le réservoir s'étend dans la direction verticale de haut en bas dans le réservoir (8) et présente une pluralité d'extrémités inférieures (4a, 4b) ;
les extrémités inférieures (4a, 4b) s'étendent dans la direction verticale vers le bas à des profondeurs différentes et forment ainsi des saillies (5a, 5b) les unes par rapport aux autres dans la direction verticale vers le bas ;
des zones de contact électrique (3a, 3b) sont prévues entre le conducteur de courant normal (2a, 2b) et le supraconducteur (1a, 1b) au moins dans la zone des saillies (5a, 5b) ; et
une régulation de niveau de remplissage est prévue pour la régulation de la hauteur du niveau de remplissage du liquide de refroidissement cryogénique dans le réservoir (8, 8a, 8b) dans la zone des saillies (5a, 5b) ou des zones de contact électrique (3a, 3b),
**caractérisée en ce que**
la régulation de niveau de remplissage est conçue de telle sorte que
la régulation de niveau de remplissage régule la hauteur de niveau de remplissage (7a', 7a") du liquide de refroidissement cryogénique dans le réservoir (8, 8a, 8b) dans la zone des saillies (5a, 5b) ou des zones de contact électrique (34, 36) de bas en haut avec charge croissante ; et
la régulation de niveau de remplissage régule la hauteur de niveau de remplissage (7a', 7a") du liquide de refroidissement cryogénique dans le réservoir (8, 8a, 8b) dans la zone des saillies (5a, 5b) ou des zones de contact électrique (34, 36) de haut en bas avec charge décroissante.

2. Pièce de transition selon la revendication 1, **caractérisée en ce que** le conducteur de courant normal (2) présente une pluralité de conducteurs de courant normal individuels (2a, 2b), qui débouchent chacun dans l'une des extrémités inférieures (4a, 4b).

3. Pièce de transition selon la revendication 1 ou 2, **caractérisée en ce que** le supraconducteur comprend une pluralité de supraconducteurs individuels (1a, 1b), en particulier des rubans supraconducteurs, qui débouchent chacun dans l'une des zones de contact électrique (3a, 3b) et sont en contact électrique.

4. Pièce de transition selon l'une des revendications précédentes, **caractérisée en ce que** les conducteurs de courant normal individuels et/ou les supraconducteurs individuels sont connectés électriquement en parallèle.

5. Pièce de transition selon l'une des revendications précédentes, **caractérisée en ce qu'**une autre zone de contact (3g) est prévue sur la plus haute des extrémités inférieures (4g), qui ne forme pas de saillie.

6. Pièce de transition selon l'une des revendications précédentes, **caractérisée en ce que** toutes les zones de contact (3a, 3b, 3g) se terminent à une hauteur commune (H) dans la direction verticale vers le haut.

7. Pièce de transition selon l'une des revendications précédentes, **caractérisée en ce que** la régulation de niveau de remplissage (24) peut réguler la hauteur du niveau de remplissage à un niveau inférieur à l'extrémité la plus basse (4a) de la pluralité d'extrémités inférieures et/ou à un niveau supérieur à la zone de contact la plus haute et/ou à tous les niveaux intermédiaires et/ou par étapes à des niveaux intermédiaires auxquels successivement les extrémités inférieures respectives sont exemptes de liquide de refroidissement.

8. Pièce de transition selon l'une des revendications précédentes, **caractérisée en ce que** la régulation de niveau de remplissage comprend un moyen pour l'évaporation ou le remplissage du liquide de refroidissement cryogénique, de telle sorte que pour l'abaissement du niveau, du liquide de refroidissement peut être évaporé par apport de chaleur et que pour l'augmentation du niveau, du liquide de refroidissement peut être ajouté au réservoir.

9. Pièce de transition selon l'une des revendications précédentes, **caractérisée en ce que** le réservoir (83) est relié à un réservoir tampon (8b) de telle sorte que du liquide de refroidissement peut être transféré du réservoir (8a) au réservoir tampon (8b) pour l'abaissement du niveau et peut être transféré du réservoir tampon au réservoir pour l'augmentation du niveau.

10. Pièce de transition selon l'une des revendications précédentes, **caractérisée en ce qu'**au moyen d'une pompe à liquide ou d'un dispositif de déplacement pour déplacement du liquide peut être délocalisé du réservoir vers le réservoir tampon ou inversement.

11. Pièce de transition selon l'une des revendications précédentes, **caractérisée en ce que** le réservoir (8a) et/ou le réservoir tampon (8b) sont étanches au gaz dans la zone (20, 21) au-dessus des hauteurs de niveau de remplissage respectives nécessaires en fonctionnement et le dispositif de déplacement (22) comprend un dispositif de pompage de gaz (221, 222) au moyen duquel du gaz, en particulier du liquide de refroidissement évaporé, au-dessus du liquide de refroidissement se trouvant dans le réservoir, peut être introduit, aspiré ou déplacé entre réservoir et/ou réservoir tampon.

12. Pièce de transition selon l'une des revendications précédentes, **caractérisée en ce que** des capteurs reliés au dispositif de régulation de niveau de remplissage sont prévus pour déterminer la hauteur du niveau de remplissage dans le réservoir et/ou le réservoir tampon.

13. Pièce de transition selon l'une des revendications précédentes, **caractérisée en ce que** le réservoir (8a) est situé à l'intérieur du réservoir tampon (8b) et le réservoir est relié au réservoir tampon (8b) uniquement en dessous de la plus basse des extrémités inférieures (4a) des conducteurs normaux (2a) pour l'entrée et la sortie du liquide de refroidissement du réservoir.

14. Procédé de régulation de charge partielle d'une pièce de transition refroidie par cryogénie, qui relie de manière électriquement conductrice un conducteur de courant normal (2) à un supraconducteur (1), dans lequel le conducteur de courant normal (2) dans le réservoir s'étende dans le sens vertical de haut en bas dans le réservoir (8) et présente une pluralité d'extrémités inférieures (4a, 4b) ; les extrémités inférieures (4a, 4b) s'étendent à des profondeurs différentes dans la direction verticale vers le bas et forment ainsi des saillies (5a, 5b) les unes par rapport aux autres dans la direction verticale vers le bas ; des zones de contact électrique (3a, 3b) sont prévues entre le conducteur de courant normal (2a, 2b) et le supraconducteur (1a, 1b) au moins dans la zone des saillies (54, 5b), **caractérisé par** les étapes suivantes :
- Régulation de la hauteur du niveau de remplissage (7a', 7a") du liquide de refroidissement cryogénique dans le réservoir (8, 8a, 8b) dans la zone des saillies (5a, 5b) ou des zones de contact électrique (3a, 3b) de bas en haut avec charge croissante ; et
- Régulation de la hauteur du niveau de remplissage (7a', 7a") du liquide de refroidissement cryogénique dans le réservoir (8, 8a, 8b) dans la zone des saillies (5a, 5b) ou des zones de contact électrique (3a, 3b) de haut en bas avec charge décroissante.

15. Procédé de régulation de charge partielle selon la revendication précédente, avec l'étape suivante :
- régulation de la hauteur du niveau de remplissage (7a', 7a") du liquide de refroidissement cryogénique par variation d'une pression de gaz au-dessus du niveau de remplissage.
